# EUROPEAN PATENT SPECIFICATION

(11) **EP 1 173 503 B1**
(45) Date of publication and mention of the grant of the patent: **22.10.2003**
(21) Application number: 00919044.8
(22) Date of filing: 10.04.2000
(51) Int. Cl.: C08J 9/06, C08J 9/00, C08J 9/26, B29C 44/56

(54) **EXPANDABLE SHEET MATERIAL MANUFACTURE**
HERSTELLUNG VON AUFSCHÄUMBAREM FOLIENMATERIAL
FABRICATION D'UN MATERIAU EN FEUILLE EXPANSIBLE

(30) Priority: 09.04.1999 GB 9908103; 18.10.1999 GB 9924418
(43) Date of publication of application: 23.01.2002
(73) Proprietor: Bryant, John Graham, Sketty, Swansea SA2 9GZ (GB)
(72) Inventor: Bryant, John Graham, Sketty, Swansea SA2 9GZ (GB)
(74) Representative: Cawdell, Karen Teresa
(86) International application number: GB0001352
(87) International publication number: WO00061666

(56) References cited:
- US-A- 4 028 289
- US-A- 4 508 669
- PATENT ABSTRACTS OF JAPAN vol. 1997, no. 03, 31 March 1997 (1997-03-31) & JP 08 291227 A (MITSUBISHI CHEM BASF CO LTD), 5 November 1996 (1996-11-05)

## Description

The present invention is concerned with manufacture of sheet material, especially sheet material suitable for use in attenuation.

It is a general desire to improve the environment through noise reduction. Noise pollution is an environmental problem in many industries. For example noise is a problem in military vehicles, consumer vehicles, factories, and also in communal buildings.

It is therefore an aim of the present invention to provide a sheet material suitable for use in attenuation, and which can be used, for example, for acoustic insulation and for noise reduction, or for reduction of interference of radio frequency (RF) waves.

Therefore, according to the present invention there is provided a method of manufacturing sheet material, which method includes:
a) providing a mixture comprising a matrix of elastomer having mixed therewith a sublimable foaming agent which can sublime to produce at least one gaseous decomposition product which is reactive with the matrix to produce at least one solid reaction product; and
b) forming the mixture into at least one sheet.

Advantageously, the sheet is subjected to conditions (such as elevated temperature) whereby the sublimable foaming agent is caused to sublime and thereby form the at least one gaseous decomposition product, whereby the sheet is caused to expand with closed cells being formed.

A preferred sublimable foaming agent is at least one substantially anhydrous compound which can decompose on sublimation. Suitable examples of such compounds are ammonium salts (such as ammonium chloride) and/or a sulfate; a particularly preferred such foaming agent is substantially anhydrous aluminium ammonium sulfate (preferably in finely divided particulate or granular form). Alternatively, the sublimable foaming agent may be an exothermically reactive combination, such as zinc powder mixed with iodine. The at least one gaseous decomposition product typically reacts with the matrix so as to form the closed cells; the closed cells preferably have internal walls which comprise the reaction product of the decomposition product and the matrix.

The sublimable foaming agent is preferably in particulate form; preferably the particles have a particle size in the range 25 to 400 microns. The sublimable foaming agent is preferably present in an amount of 5 to 15 parts per 100 parts of the elastomer.

Advantageously, the mixture further includes a filler material, such as particulate carbon black, clay or limestone, or finely divided paper. Particulate silica is preferred. It is preferred that the silica is in finely divided form, preferably in the range of 50 to 500 microns. A preferred particle size is about 120 microns.

If silica is used, it is advantageously waste silica, such as waste silica from skimmings from power station lakes.

A further suitable filler is a porous mineral material, such as a montmorillanoid mineral, preferably vermiculite (hydrated magnesium-aluminium-iron silicate).

Optionally, the mixture in step a) may include particulate magnetisable material. The magnetisable material may be a ferrous material, which may, in some embodiments, be coated with copper; this embodiment is particularly preferred when the material is to be used in a Faraday screen. A particularly preferred magnetisable material for use according to the invention is mill scale.

Typically, the particulate magnetisable material is finely divided, preferably having a particle size from 25 to 400 microns (especially preferred being about 300 microns). The magnetisable material and filler, when present, are preferably in a ratio of about 4 parts by weight of magnetisable material per part by weight of filler.

The mixture in step a) may optionally include particulate vulcanised rubber. The particulate vulcanised rubber is preferably present in the elastomer matrix in the form of discrete particles. The vulcanised rubber should therefore be such that it is substantially free of reaction with the elastomer when the latter is cured.

It is preferred that the particulate vulcanised rubber is obtained cryogenically, by comminution of waste rubber compounds (for example, from waste tyres). Such waste rubber compounds generally include natural rubber and/or SBR. The vulcanised rubber advantageously may include comminuted rubber tyres such as waste or worn tyres. Disposal of waste or worn tyres would previously have been in landfill sites. Therefore, a further advantage of this particular embodiment of the present invention is to provide a use for waste tyres.

The above-mentioned vulcanised rubber is preferably in finely divided form. It is further preferred that the vulcanised rubber has a particle size of less than 500 microns, most preferably less than 120 microns.

An exemplary formulation for the matrix used according to the invention is the following:
KELTAN (a Product of DSM-NV Ethylene Propylene Rubber)
SPHERON 5000A Medium Fine Carbon Black
Zinc Oxide Active
Stearic Acid
PEG 4000 (polyethylene glycol soap)
Britomya BSH 20 (plasticiser)
Flexon 815 Liquid (plasticiser)
KEZADOL GR (processing aid)
RHENOGRAN 580 Sulphur (vulcanising agent)
RHENOGRAN TMTD 80 Tetramethylthiuram Disulphide (vulcanising agent)
RHENOGRAN MBT 80 Mercaptobenzothiazole (vulcanising agent)
RHENOGRAN MBTS 80 Benzothiazyl Disulphide (vulcanising agent)

The solid ingredients (including the sublimable foaming agent and the optional ingredients such as magnetisable material, vulcanised rubber and filler material), may be mixed together prior to further mixing with the elastomer, prior to curing or-vulcanisation of the latter.

The latter further mixing is typically carried out in a mixer such as a Banbury rotor type mixer. The rotor speed of the mixer is typically in the range of 60 to 100 rpm, preferably about 80 rpm.

The elastomer forming the matrix is preferably of a type different to that normally employed in tyres, the latter (as mentioned above) generally including natural rubber and/or SBR, and/or a polyolefin type rubber, such as an ethylene-propylene rubber or EPDM.

The sublimable foaming agent may be added to the elastomer before addition of the other solid ingredients, or with the other solid ingredients. Typically the mixing of the solid ingredients with the elastomer is for 4 to 12 minutes, preferably for about 8 minutes; such mixing is typically at a temperature of 80°C to 110°C.

Exemplary solid mixes for use according to the invention are set out in the following Table 1.

**Table 1**

| | **Matrix A** | **Matrix B** | **Matrix C** | **Matrix D** |
|---|---|---|---|---|
| Keltan 314 | 2.4000 | 2.4000 | 2.4000 | 2.700 |
| Keltan 4903 | 9.6000 | 9.6000 | 9.6000 | 10.6000 |
| Zinc Oxide Active | 0.3500 | 0.3500 | 0.3500 | 0.3900 |
| Stearic Acid 1800 | 0.1200 | 0.1200 | 0.1200 | 0.1300 |
| PEG 4000 | 0.1200 | 0.1200 | 0.1200 | 0.1300 |
| TE 80 Powder | 0.2000 | - | - | - |
| STUKTOL W816 | 0.2000 | - | - | - |
| Baco Superfine 7 | 14.8000 | - | - | - |
| Spheron 5000A | 2.0000 | 16.8000 | 16.8000 | 18.7000 |
| Britomya BSH 20 | 4.8000 | | 4.8000 | 5.3000 |
| Flexon 815 Liquid | 8.8000 | 8.8000 | 8.800 | 9.800 |
| KEZADOL GR | 0.5000 | 0.5000 | 0.500 | 0.5600 |
| Rhenogran CTP80(PVI) | 0.0900 | 0.0900 | 0.090 | 0.1000 |
| RHENOGRAN 580 | 0.1100 | 0.1100 | 0.1100 | 0.1200 |
| RHENOGRAN TMTD 80 | 0.8800 | 0.0800 | 0.0800 | 0.0900 |
| RHENOGRAN MBT 80 | 0.0270 | 0.0270 | 0.0270 | 0.0300 |
| RHENOGRAN MBTS 80 | 0.0900 | 0.0900 | 0.0900 | 0.1000 |
| RGF Filler A | 13.0000 | 13.0000 | 13.000 | 9.7000 |
| RGF Filler B | 21.6000 | 30.3000 | 13.00 | 9.7000 |
| Total Weight (kg) | 78.8871 | 87.1871 | 69.8871 | 68.1500 |

The sheets obtained in step b) may be formed by passing the mixture produced in step a) through a dump mill, then onto a sheeting mill and finally onto a three bowl calender for sheeting off. Advantageously, the thickness of the sheets may be varied. A preferred thickness of the sheets is from 0.2mm up to 6mm, when in an unexpanded form.

When the attenuation material is to be sheeted, the mixture preferably includes a releasing agent so as to substantially prevent the mixture from sticking to the rollers. A suitable releasing agent is an organo silicone, such as the product commercially sold under the trademark WS180 Struktol.

The attenuation level of the material may depend on the thickness of the resulting sheet. The sheets may be used for a wide variety of uses. Typical uses include in buildings (traditionally built buildings with cavity space and roof trusses can be lined with the material according to the present invention), refitting of buildings (for example, existing buildings that have changed uses to pubs, clubs, discos etc), building door linings, blinds, in road, rail or air transport (for example as a lining material inside cabins, carriages, tunnels and barriers on roads) and in general household and industrial machinery.

Advantageously, the method may further include the step of curing the elastomer matrix formed in step b). The material may be cured in a number of ways, for example, in line ovens or microwave ovens, however a fast opening press is preferred. It is preferred that curing is at a temperature in the range of 165°C to 180°C; such curing would also cause sublimation and decomposition of the foaming agent. A lower temperature range may permit curing of the elastomer matrix; however, this will incur a longer cycle time.

Preferably, such curing takes place in a press such that on relief of the press loading, the matrix is permitted to expand following sublimation of the sublimable foaming agent. The matrix subsequently contracts to a volume substantially greater than the volume of the matrix prior to the initial expansion. As the curing takes place hollow cores are formed in the matrix; it is the formation of the hollow cores which results in the cured matrix being substantially greater than the volume of the matrix prior to the initial expansion.

Typically, the mixture further includes stearic acid, preferably in the range 0.1 to 0.25% (further preferably in the range 0.13% to 0.17%) by weight of the mixture. Advantageously, the stearic acid produces stearate which result in a hardening of the surface of the core.

Advantageously, the sheets formed in step (b) may be laminated to paperboard, plasterboard, woven fabrics or the like.

According to a further embodiment of the present invention, it is preferred that at least one fire retardant is added to the material prior to step b). Such fire retardants include aluminium sulfate based compounds, such as the compound commercially available under the trademark BACO Superfine 7 from the British Aluminium-Company. In this embodiment it is preferred that the material includes a releasing agent.

According to a second aspect of the present invention, it is preferred that the material is magnetised to provide hysteresis characteristics. Advantageously a magnetic screen created around the material provides attenuation of electromagnetic induction and radio frequency (RF) waves.

According to yet a further embodiment of the present invention, neoalkoxy zirconate may be added to the mixture in step (b) so as to promote adhesion of the material to a number of materials (for example, steel, aluminium, high performance polymers such as polyamides, or other polymer such as PET), and also to enhance dispersion of particulate material in the elastomer matrix. It is preferred that the neoalkoxy zirconate is added in the ratio of about 5 parts per 100 of the elastomer.

## Claims

1. A method of manufacturing sheet material, which method includes:
a) providing a mixture comprising a matrix of elastomer having mixed therewith a sublimable foaming agent which can sublime to produce at least one gaseous decomposition product which is reactive with the matrix to produce at least one solid reaction product; and
b) forming the mixture into at least one sheet.

2. A method according to claim 1, **characterised in that** the sheet is subjected to conditions whereby the sublimable foaming agent is caused to sublime and thereby form the at least one gaseous decomposition product, whereby the sheet is caused to expand with closed cells being formed.

3. A method according to claim 1 or 2, **characterised in that** the at least one gaseous decomposition product reacts with the matrix so as to form the closed pores which preferably have internal walls which comprise the reaction product of the decomposition product and the matrix.

4. A method according to any of claims 1 to 3, **characterised in that** the sublimable foaming agent is in finely divided, particulate or granular form (which preferably includes an ammonium salt or a sulfate), and/or
includes at least one substantially anhydrous compound which can decompose on sublimation.

5. A method according to any of claims 1 to 4, **characterised in that** the sublimable foaming agent includes an exothermically reactive combination (which preferably includes zinc powder mixed with iodine).

6. A method according to any of claims 1 to 5, **characterised in that** the sublimable foaming agent is in particulate form having a size in the range of 25 to 400 microns; and/or
the sublimable foaming agent is present in an amount of 5 to 15 parts per 100 parts of the elastomer.

7. A method according to any of claims 1 to 6, **characterised in that** the mixture further includes a filler material, which preferably includes particulate carbon black, clay or limestone, finely divided paper, or a porous mineral material, a montmorillanoid mineral (such as vermiculite - hydrated magnesium-aluminium-iron silicate).

8. A method according to claim 7, **characterised in that** the filler includes particulate silica, (preferably in the range of 50 to 500 microns), such as waste silica, (preferably silica from skimmings from power station lakes).

9. A method according to any of claims 1 to 8, **characterised in that** the mixture in step a) includes particulate magnetisable material, preferably a ferrous material, such as mill scale.

10. A method according to claim 9, **characterised in** ferrous material is coated with copper, and/or the magnetisable material has a particle size of 25 to 400 microns.

11. A method according to any of claims 1 to 10, **characterised in that** the mixture in step (a) further includes particulate vulcanised rubber (typically having particle size of less than 500 microns), which preferably includes cryogenically comminuted waste rubber, such as waster rubber obtained from waste or worn tyres.

12. A method according to any of claims 1 to 11, **characterised in that** solid ingredients present are pre-mixed prior to mixing with the elastomer matrix; and/or
the elastomer matrix includes one or more of natural rubber, SBR, and a polyolefin type rubber; and/or
the sublimable foaming agent is added to the elastomer matrix prior to, or with the mixing (typically at a temperature of 80 to 110°C) of other solid ingredients.

13. A method according to any of claims 1 to 12, **characterised in that** the sheet obtained in step b) is formed by passing the mixture produced in step a) through a dump mill, then onto a sheeting mill and subsequently onto a three bowl calender for sheeting off, preferably the sheet formed in step b) has a thickness of 0.2mm to 6mm, when in an unexpanded form.

14. A method according to any of claims 1 to 13, **characterised in that** at least one fire retardant (such as an aluminium sulfate based compound) is added to the material prior to step b).

15. A method according to any of claims 1 to 14, **characterised in that** the mixture includes a releasing agent such as organo silicone.

16. A method according to any of claims 1 to 15, **characterised in that** the elastomer matrix formed in step b) is cured, preferably at a temperature in the range of 165°C to 180°C.

17. A method according to claim 16, **characterised in that** the curing takes place in a press such that on relief of the press loading, the matrix is permitted to expand following sublimation of the sublimable foaming agents.

18. A method according to any of claims 1 to 17, **characterised in that** the mixture further includes stearic acid, typically present in the range 0.1 to 0.25% by weight of the mixture.

19. A method according to any of claims 1 to 18, **characterised in that** the sheets formed in step (b) are laminated to paperboard, plasterboard or woven fabrics.

20. A method according to any of claims 1 to 19, **characterised in that** the material is magnetised so to provide hysteresis characteristics.

21. A method according to any of claims 1 to 20, **characterised in that** the neoalkoxy zirconate is added to the mixture in step (b).

## Patentansprüche

1. Verfahren zum Herstellen von Folienmaterial, wobei das Verfahren einschließt:
a) Bereitstellen eines Gemisches, das eine Elastomermatrix aufweist, mit der ein sublimierbarer Schaumbildner gemischt ist, welcher sublimieren kann, um wenigstens ein gasförmiges Spalt- bzw. Zerfallsprodukt zu erzeugen, welches mit der Matrix reagieren kann, um wenigstens ein festes Reaktionsprodukt zu erzeugen; und
b) Ausgestalten des Gemisches in wenigstens einer Schicht bzw. Folie.

2. Verfahren nach Anspruch 1, **dadurch gekennzeichnet, dass** die Schicht bzw. Folie Bedingungen ausgesetzt wird, wodurch der sublimierbare Schaumbildner sublimiert und dabei das wenigstens eine gasförmige Spalt- bzw. Zerfallsprodukt bildet, wobei sich die Schicht ausdehnt, wobei geschlossene Zellen gebildet werden.

3. Verfahren nach Anspruch 1 oder 2, **dadurch gekennzeichnet, dass** das wenigstens eine gasförmige Spalt- bzw. Zerfallsprodukt mit der Matrix reagiert, um die geschlossenen Poren zu bilden, welche vorzugsweise innere Wände aufweisen, welche das Reaktionsprodukt von dem Spalt- bzw. Zerfallsprodukt und der Matrix aufweisen.

4. Verfahren nach einem der Ansprüche 1 bis 3, **dadurch gekennzeichnet, dass** der sublimierbare Schaumbildner in einer fein unterteilten, aus Partikeln bestehenden oder körnigen Form vorliegt (welche vorzugsweise ein Amoniumsalz oder ein Sulfat einschließt), und/oder
wenigstens eine im wesentlichen wasserfreie Zusammensetzung einschließt, welche bei Sublimierung zerfallen kann.

5. Verfahren nach einem der Ansprüche 1 bis 4, **dadurch gekennzeichnet, dass** der sublimierbare Schaumbildner eine exothermisch reaktionsfähige Verbindung aufweist (welche vorzugsweise Zinkpuder aufweist, das mit Jod gemischt ist).

6. Verfahren nach einem der Ansprüche 1 bis 5, **dadurch gekennzeichnet, dass** der sublimierbare Schaumbildern in aus Partikeln bestehender Form vorliegt, und eine Größe im Bereich von 25 bis 400 Mikrometer aufweist; und/oder
der sublimierbare Schaumbildner in einer Menge von 5 bis 15 Teilen auf 100 Teilen des Elastomers vorliegt.

7. Verfahren nach einem der Ansprüche 1 bis 6, **dadurch gekennzeichnet, dass** das Gemisch ferner ein Füllmaterial aufweist, das vorzugsweise partikelförmiges/partikelförmigen Ruß, Lehm bzw. Ton oder Kalkstein, fein geteiltes Papier oder ein poröses Mineralmaterial, ein quellfähiges Tonmaterial (wie z.B. Vermiculit - hydritisiertes Magnesiumaluminiumeisensilikat) aufweist.

8. Verfahren nach Anspruch 7, **dadurch gekennzeichnet, dass** der Füller partikelförmiges Kieselsäureanhydrid aufweist (vorzugsweise in einem Bereich von 50 bis 500 Mikrometer), wie z.B. Abfallkieselsäuranhydrid (vorzugsweise Kieselsäureanhydrid vom Abkrammen von Kraftwerksseen).

9. Verfahren nach einem der Ansprüche 1 bis 8, **dadurch gekennzeichnet, dass** das Gemisch in Schritt a) partikelförmiges magnetisierbares Material aufweist, vorzugsweise ein Eisenmaterial, wie z.B. Walzzunder.

10. Verfahren nach Anspruch 9, **dadurch gekennzeichnet, dass** das Eisenmaterial mit Kupfer beschichtet wird und/oder das magnetisierbare Material eine Partiketgröße von 25 bis 400 Mikrometer aufweist.

11. Verfahren nach einem der Ansprüche 1 bis 10, **dadurch gekennzeichnet, dass** die Mischung in Schritt a) ferner partikelförmigen vulkanisierten Gummi aufweist (der typischerweise eine Partikelgröße von weniger als 500 Mikrometer hat), welcher vorzugsweise kryogenisch zerkleinerten Abfallgummi einschließt, wie z.B. Abfallgummi, der von abgenutzten oder abgefahrenen Reifen erhalten wird.

12. Verfahren nach einem der der Ansprüche 1 bis 11, **dadurch gekennzeichnet, dass** die vorhandenen festen inhaltsstoffe vorgemischt werden vor dem Mischen mit der Elastomermatrix; und/oder
die Elastomermatrix einen oder mehrere natürliche Gummis, SBR und einen polyolefinen Gummityp aufweist; und/oder
der sublimierbare Schaumbildner der Elastomermatrix vor oder mit dem Mischen (typischerweise bei einer Temperatur von 80 bis 110°C) mit anderen festen Inhaltsstoffen hinzugeführt wird.

13. Verfahren nach einem der Ansprüche 1 bis 12, **dadurch gekennzeichnet, dass** die Schicht bzw. Folie, die in Schritt b) erhalten wird, gebildet wird durch Durchführen des Gemisches, das im Schritt a) erzeugt wird, durch eine Schlackenwalze bzw. Schlackenbrechanlage, dann Zuführen auf eine Folienwalze und nachfolgend einen Dreiwalzenkalander zur Schichtbildung, wobei vorzugsweise die in Schritt b) gebildete Schicht bzw. Folie eine Dicke von 0,2mm bis 6mm aufweist, wenn sie in einer nicht expandierten Form vorliegt.

14. Verfahren nach einem der Ansprüche 1 bis 13, **dadurch gekennzeichnet, dass** wenigstens ein Feuerverzögerer (wie bspw. eine aluminiumsulfatbasierte Zusammensetzung) dem Material vor Schritt b) hinzugefügt wird.

15. Verfahren nach einem der Ansprüche 1 bis 14, **dadurch gekennzeichnet, dass** das Gemisch ein Formtrennmittel aufweist, wie z.B. Organosilizium.

16. Verfahren nach einem der Ansprüche 1 bis 15, **dadurch gekennzeichnet, dass** die in Schritt b) gebildete Elastomermatrix getrocknet bzw. vulkanisiert wird, vorzugsweise bei einer Temperatur im Bereich von 165°C bis 180°C.

17. Verfahren nach Anspruch 16, **dadurch gekennzeichnet, dass** das Trocknen bzw. Fermentieren in einer Presse stattfindet, derart, dass bei Entlastung der Presslast der Matrix ermöglicht wird, der Sublimierung der sublimierbaren Schaumbildner folgend zu expandieren.

18. Verfahren nach einem der Ansprüche 1 bis 17, **dadurch gekennzeichnet, dass** das Gemisch ferner eine Stearinsäure aufweist, die typischerweise in dem Bereich von 0,1 bis 0,25 Gewichtsprozent des Gemisches vorliegt.

19. Verfahren nach einem der Ansprüche 1 bis 18, **dadurch gekennzeichnet, dass** die in Schritt (b) gebildeten Schichten bzw. Folien auf Karton, Gipskartonplatten oder Webstoffe laminiert werden.

20. Verfahren nach einem der Ansprüche 1 bis 19, **dadurch gekennzeichnet, dass** das Material derart magnetisiert wird, um Hystereseeigenschaften bereitzustellen.

21. Verfahren nach einem der Ansprüche 1 bis 20, **dadurch gekennzeichnet, dass** Neoalkoxyzirkonat dem Gemisch im Schritt (b) hinzugefügt wird.

## Revendications

1. Procédé de fabrication d'un matériau en feuille, lequel procédé comporte :
a) la fourniture d'un mélange comprenant une matrice d'élastomère à laquelle on a mélangé un agent moussant sublimable, qui peut sublimer pour produire au moins un produit de décomposition gazeuse qui réagit avec la matrice pour produire au moins un produit de réaction solide ; et
b) la mise en forme du mélange en au moins une feuille.

2. Procédé selon la revendication 1, **caractérisé en ce que** la feuille est soumise à des conditions dans lesquelles on fait sublimer l'agent moussant sublimable, et on forme ainsi ledit au moins un produit de décomposition gazeuse, grâce à quoi la feuille se dilate et des cellules fermées se forment.

3. Procédé selon la revendication 1 ou 2, **caractérisé en ce que** ledit au moins un produit de décomposition gazeuse réagit avec la matrice de façon à former les pores fermés qui ont de préférence des parois internes qui comprennent le produit de réaction du produit de décomposition et la matrice.

4. Procédé selon l'une quelconque des revendications 1 à 3, **caractérisé en ce que** l'agent moussant sublimable est finement divisé sous la forme de particules ou de granulés (qui comportent, de préférence, un sel d'ammonium ou un sulfate), et/ou
comportent au moins un composé sensiblement anhydre qui peut se décomposer au moment de la sublimation.

5. Procédé selon l'une quelconque des revendications 1 à 4, **caractérisé en ce que** l'agent moussant sublimable comporte une combinaison réactive exothermiquement (qui comporte de préférence de la poudre de zinc mélangée avec de l'iode).

6. Procédé selon l'une quelconque des revendications 1 à 5, **caractérisé en ce que** l'agent moussant sublimable est sous une forme particulaire ayant une taille comprise dans la plage de 25 à 400 microns ; et/ou
l'agent moussant sublimable est présent en une quantité de 5 à 15 parties pour 100 parties de l'élastomère.

7. Procédé selon l'une quelconque des revendications 1 à 6, **caractérisé en ce que** le mélange comporte en outre un matériau d'apport, qui comporte de préférence des particules de noir de carbone, d'argile ou de calcaire, du papier finement divisé, ou un matériau minéral poreux, un minéral montmorrilanoïde (tel que vermiculite - magnésium hydraté - aluminium - silicate de fer).

8. Procédé selon la revendication 7, **caractérisé en ce que** la charge de remplissage comporte de la silice particulaire (de préférence comprise dans la plage de 50 à 500 microns), telle que de la silice résiduaire, (de préférence de la silice provenant de produits écumés dans des lacs de centrale de production).

9. Procédé selon l'une quelconque des revendications 1 à 8, **caractérisé en ce que** le mélange de l'étape a) comporte un matériau particulaire pouvant être aimanté, de préférence un matériau ferreux, comme des battitures.

10. Procédé selon la revendication 9, **caractérisé en ce que** le matériau ferreux est enduit de cuivre, et/ou le matériau pouvant être aimanté a une taille de particule de 25 à 400 microns.

11. Procédé selon l'une quelconque des revendications 1 à 10, **caractérisé en ce que** le mélange de l'étape a) comporte en outre du caoutchouc vulcanisé particulaire (ayant typiquement une taille de particule inférieure à 500 microns), qui comporte de préférence des déchets de caoutchouc fragmenté cryogéniquement, tel que des déchets de caoutchouc obtenus à partir de pneus usés ou mis au rebut.

12. Procédé selon l'une quelconque des revendications 1 à 11, **caractérisé en ce que** les ingrédients solides présents sont préalablement mélangés avant le mélange avec la matrice d'élastomère ; et/ou
la matrice d'élastomère comporte un ou plus de caoutchouc naturel, SBR, et un caoutchouc du type polyoléfine ; et/ou
l'agent moussant sublimable est ajouté à la matrice d'élastomère avant, ou en même temps que le mélange (typiquement à une température de 80 à 110°C) d'autres ingrédients solides.

13. Procédé selon l'une quelconque des revendications 1 à 12, **caractérisé en ce que** la feuille obtenue lors de l'étape b) est formée en faisant passer le mélange produit au cours de l'étape a) à travers un broyeur basculant, puis sur un laminoir et enfin sur une calandre à trois cylindres, afin de former une feuille, et **en ce que**, de préférence, la feuille formée au cours de l'étape b) a une épaisseur de 0,2 mm à 6 mm, lorsqu'elle n'est pas dilatée.

14. Procédé selon l'une quelconque des revendications 1 à 13, **caractérisé en ce qu'**au moins un retardeur de flamme (tel qu'un composé à base de sulfate d'aluminium) est ajouté au matériau avant l'étape b).

15. Procédé selon l'une quelconque des revendications 1 à 14, **caractérisé en ce que** le mélange comporte un agent de démoulage tel qu'un organo silicone.

16. Procédé selon l'une quelconque des revendications 1 à 15, **caractérisé en ce que** la matrice d'élastomère formée au cours de l'étape b) est cuite, de préférence à une température comprise dans la plage de 165°C à 180°C.

17. Procédé selon la revendication 16, **caractérisé en ce que** la cuisson a lieu dans une presse, de telle sorte que, au moment du démoulage de la charge de la presse, la matrice peut se dilater à la suite de la sublimation des agents moussants sublimables.

18. Procédé selon l'une quelconque des revendications 1 à 17, **caractérisé en ce que** le mélange comporte en outre de l'acide stéarique, typiquement présent dans une plage de 0,1 à 0,25 % en poids du mélange.

19. Procédé selon l'une quelconque des revendications 1 à 18, **caractérisé en ce que** les feuilles formées au cours de l'étape b) sont laminées pour faire du carton, du placoplâtre ou des étoffes tissées.

20. Procédé selon l'une quelconque des revendications 1 à 19, **caractérisé en ce que** le matériau est aimanté de façon à fournir des caractéristiques d'hystérésis.

21. Procédé selon l'une quelconque des revendications 1 à 20, **caractérisé en ce que** du néoalkoxy zirconate est ajouté au mélange au cours de l'étape b).
